# EUROPÄISCHE PATENTANMELDUNG

(11) **EP 1 221 591 A1**
(43) Veröffentlichungstag der Anmeldung: **10.07.2002**
(21) Anmeldenummer: 01250006.2
(22) Anmeldetag: 05.01.2001
(51) Int. Cl.: G01D 5/244

(54) **Redundantes Messsystem**

(71) Anmelder: Moderow, Günther, 12357 Berlin (DE)
(72) Erfinder: Moderow, Günther, 12357 Berlin (DE)

(57) **Zusammenfassung**

Verfahren zur Prüfung von inkrementellen Meßsystemen, insbesondere von Positionsmeßeinrichtungen wie inkrementelle Längenmaßstäbe und inkrementelle Winkelmeßeinrichtungen. Durch eine Abtasteinheit gewonnenen Signale werden verglichen, wobei bei gleichem Pegel der Signale eine Fehlermeldung erzeugt wird.

## Beschreibung

Verfahren zur lückenlosen Überprüfung von inkrementellen Längen-oder Winkelmeßeinrichtungen mit sofortiger Korrekturmöglichkeit.

Die Erfindung betrifft ein Verfahren zur lückenlosen Überprüfung von inkrementellen Längen- oder Winkelmeßeinrichtungen mit sofortiger Korrekturmöglichkeit. Inkrementelle Meßsysteme werden für die Lageregelung von Positionierantrieben verwendet. Mit ihnen werden die Istwerte der Wellenbewegung des Antriebes erzeugt, die für die Positionsregelung benötigt werden. In heutigen hochautomatisierten Produktionen wird überwiegend "mannlos" gefertigt, die Fertigungsprozeße werden u.a. durch Koordinatenmeßgeräte oder durch Inprozeßmessungen geregelt. Bei stabilen Fertigungsprozeßen wird nach anerkannter Methode eine Losgröße zur Qualitätsüberwachung festgelegt, d.h.- nicht jedes Werkstück wird vermessen, sondern je nach Losgröße jedes 5, 10 oder 100'te Werkstück. Eine schwer lokalisierbare Störung im Fertigungsprozeß wird durch die schleichende Verschmutzung eines Meßsystems einer CNC-Maschine ausgelöst, diese Störung wirkt sich kostenträchtig auf die Regelung der gesamten Prozeßkette aus.

Die Erfindung erkennt jede Systemstörung selbst, setzt eine Warnmeldung an die CNC-Maschinensteuerung ab und sorgt dafür, das bei beginnender Verschmutzung des Meßsystems mittels eines Korrekturverfahrens die CNC-Achse ohne Positionsabweichungen weiter geregelt wird, bis das Meßsystem durch einen Instandhalter ersetzt werden kann.

In der Erfindung DE 3427 411 A1 wird eine quasi absolute Meßeinrichtung beschrieben, die entlang der Meßteilung eine Reihe identischer Referenzmarken aufweist, die Abstände zwischen den Referenzmarken sind gemäß einer Codierung verschieden. Mittels eines, in der Auswerteinheit abgespeicherten Abtastrasters kann jede einzelne Referenzmarke eindeutig identifiziert werden.

Auftretende Zählabweichungen, verursacht durch Störungen, werden durch die Ausführung der Meßeinrichtung nur lückenhaft erkannt - siehe DE 3427 411 A1 Seite 7 ab Zeile 6.

In DE-PS 29 52 106 ist eine inkrementelle Längen- oder Winkelmeßeinrichtung beschrieben, bei der auf einem Maßstab neben der Teilung Referenzmarken mit jeweils unterschiedlichen Strichgruppenverteilungen vorgesehen sind. Die einzelnen Referenzmarken werden von Abtastfeldern in einer Abtasteinheit abgetastet, wobei jedes Abtastfeld einer Referenzmarke eindeutig zugeordnet ist, indem es die gleiche Strichgruppenverteilung aufweist. Diese Anordnung ist im Vergleich zu der Erfindung zu kostspielig und aufwendig.

Die Erfindung beschreibt ein Verfahren, welches analog zu absoluten oder quasi absoluten Meßsystemen genauso zuverlässig ist, darüber hinaus eine bessere Funktionalität bietet und kostengünstiger produziert werden kann, als die bisher bekannten Meßsysteme.

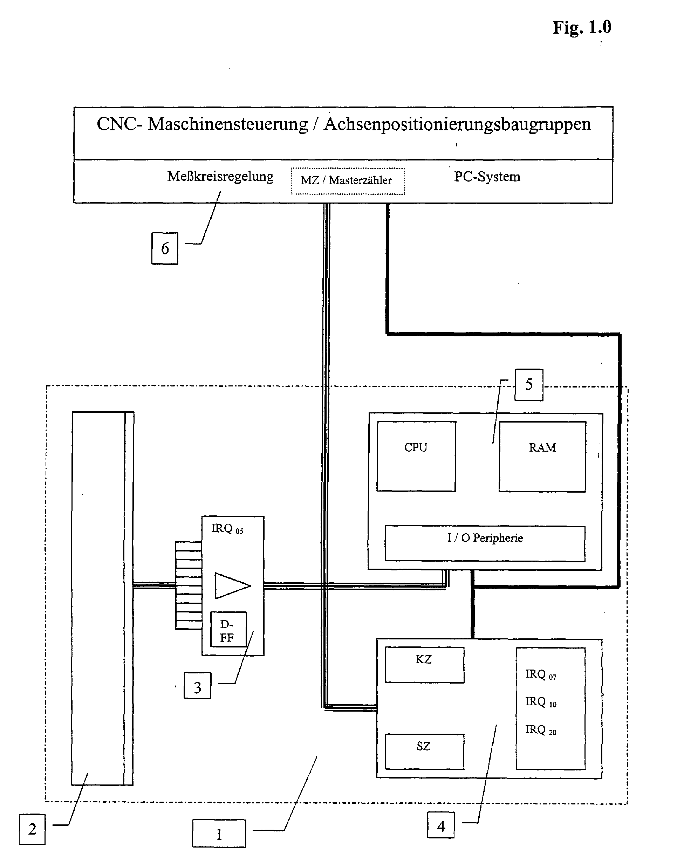

**Die Anlage 1/ Fig. 1.0** zeigt ein Beispiel für den Aufbau eines redundanten Meßsystems.

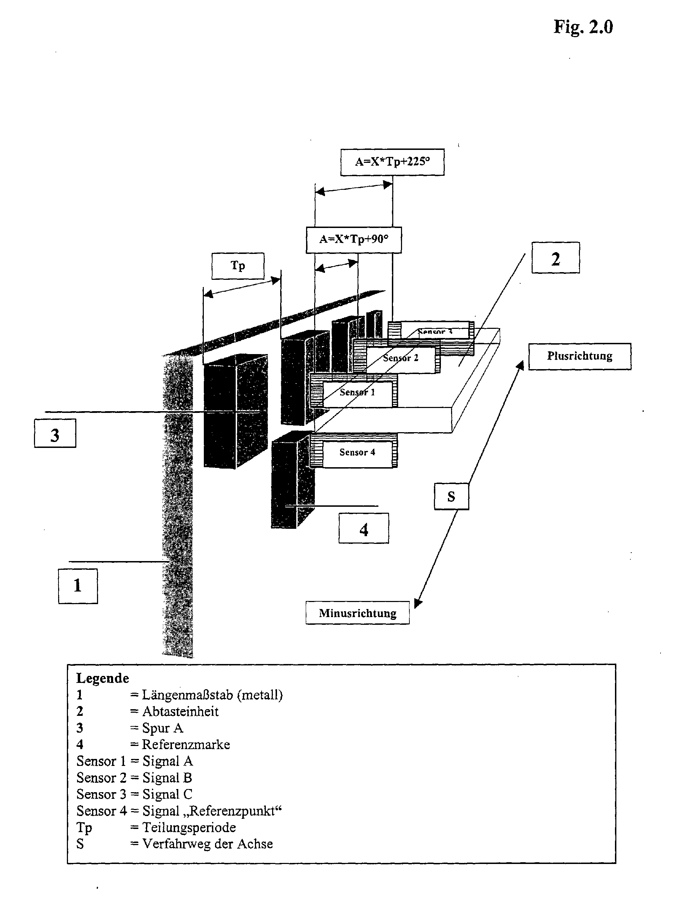

Darstellung der Baueinheit "redundantes Meßsystem" (1), die Baugruppe "redundante Meßvorrichtung" (2) ist bei einem direktem Meßverfahren an der CNC-Achse montiert, wobei i.d.R. der Längenmaßstab im "Bett" der CNC-Maschine - und die Abtasteinheit am "Schlitten" montiert ist, der parallel zum Maßstab bewegt wird siehe Fig. 2.0.

Die Baugruppen (3), (4) und (5) können auch in einem externen Gehäuse außerhalb der Baugruppe (2) oder in der übergelagerten CNC-Maschinensteuerung (6) integriert werden.

Die Baugruppe "redundante Meßvorrichtung" (2) besteht aus dem Maßstab und einer Abtasteinheit (Fig.2), die durch ein Mehrleitersystem mit der Baugruppe "Interface" (3) verbunden ist.

Die Ausgangssignale der Baugruppe (3) werden den Baugruppen Zähler/ Signale (4), sowie der Baugruppe Input/Output Mikrocomputer (5) und dem Masterzähler der übergelagerten Baueinheit "CNC-Maschinensteuerung" (6) mittels eines Mehrleitersystems zugeführt.

Ein separates Datenbussystem verbindet die Baugruppen "Zähler/Signale" (4) mit der Baugruppe "I/O Peripherie Mikrocomputer" (5) und dem Masterzähler der übergelagerten Baueinheit "CNC-Maschinensteuerung" (6).

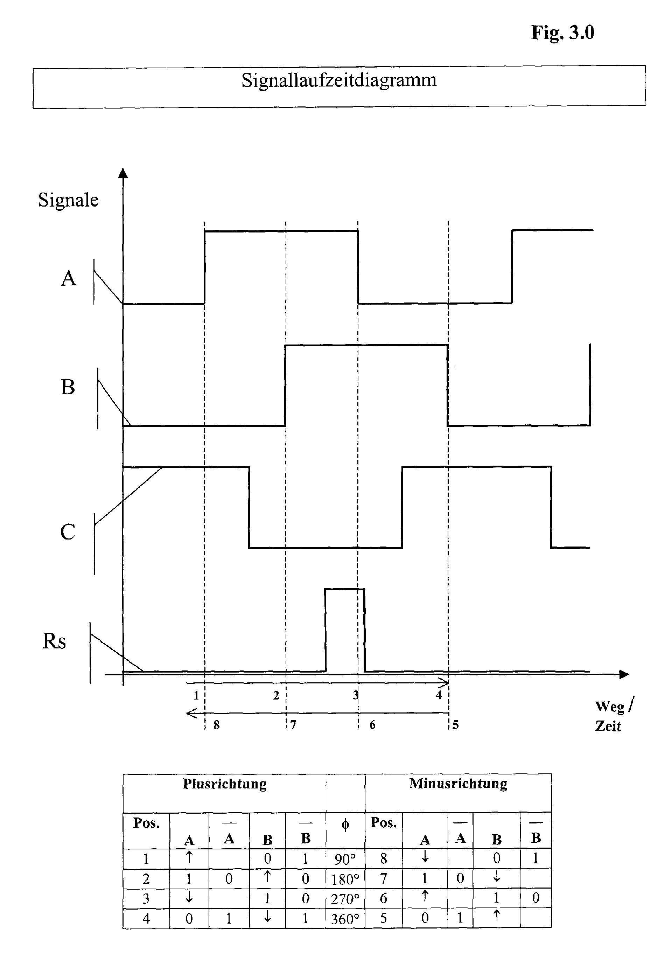

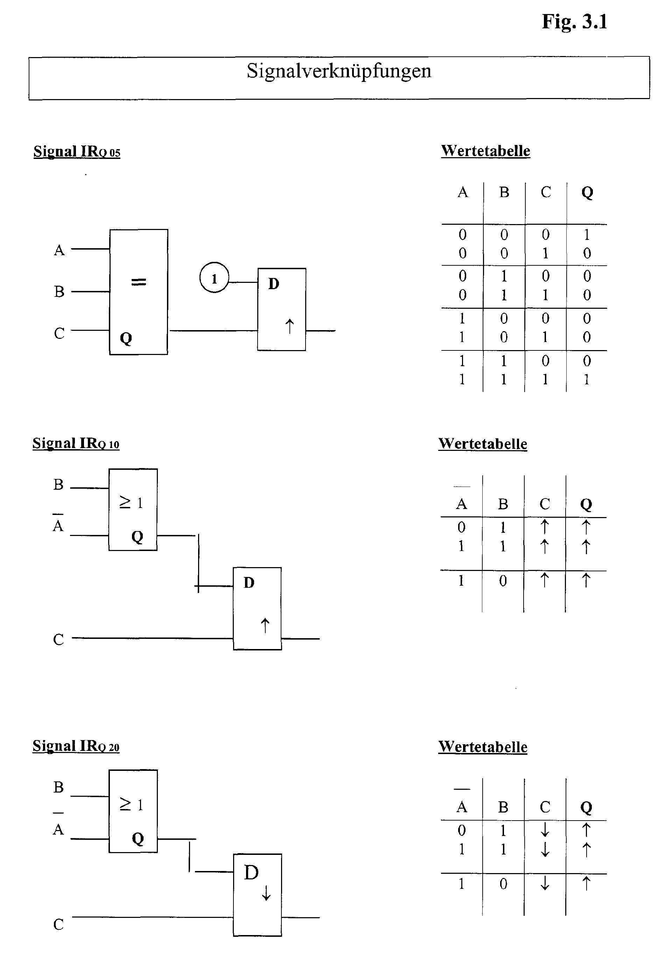

In der Baugruppe (2) werden mittels der Abtasteinheit (Fig.2) die phasenverschobenen digitalen Signale A, B, C und RS (Fig.3.0) gewonnen, durch ein Mehrleitersystem der Baugruppe Interface (3) und der übergelagerten Baueinheit (6) "MZ/ Masterzähler" zugeführt.

In einer ( Stand der Technik ) nicht dargestellten D-Flip-Flop-Schaltung, die in der Baugruppe (3) integriert ist, werden beim Abtasten des Maßstabs während einer Teilungsperiode (Fig.2.0) 8 verschiedene fest definierte Signalzustände erzeugt (Fig. 3.0), diese teilen sich in jeweils 4 verschiedene fest definierte Signalzustände für Plus- und Minusrichtung auf und werden über ein Mehrleitersystem den programmierbaren Zählern KZ (Korrekturzähler) und dem SZ (Slavezähler) der Baugruppe (4) zugeführt.

Die Zähler KZ und SZ sind programmierbare UP/Down Zähler, die die Signale der nicht dargestellten D-Flip-Flop-Schaltung in Plusrichtung addieren und die Signale in Minusrichtung subtrahieren. Der Zählwert der Zähler KZ und SZ kann durch die Baugruppe (5) Mikroprozessor überschrieben, wie auch ausgelesen werden.

In der Baugruppe (4) werden die Signale A, B und C gemäß der Fig. 3.1 verknüpft und das Vernüpfungsergebnis wird über ein separates Datenbussystem der Baugruppe (5) Mikroprozessor zugeführt.

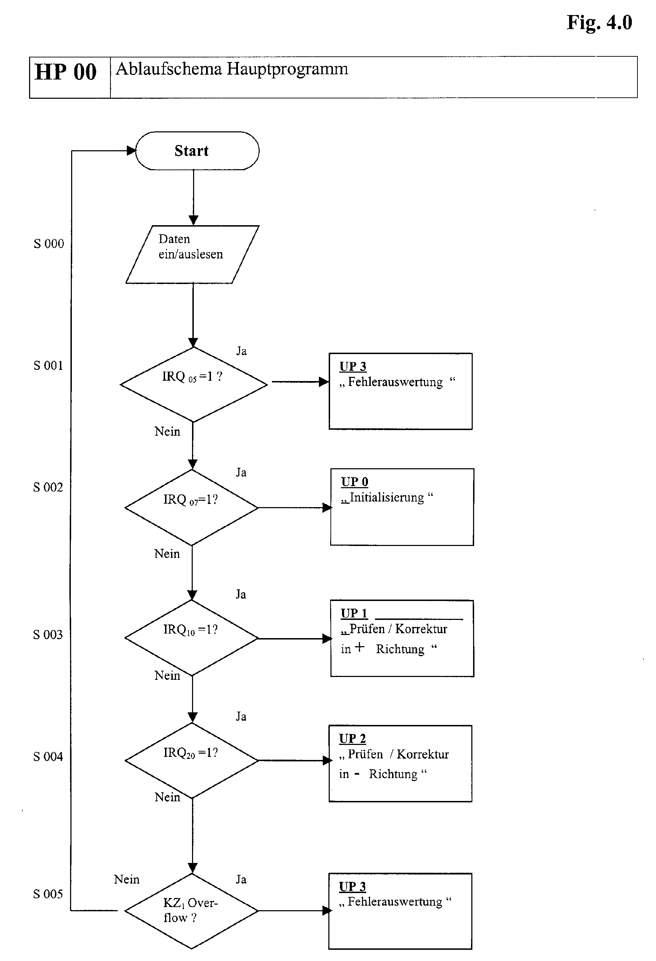

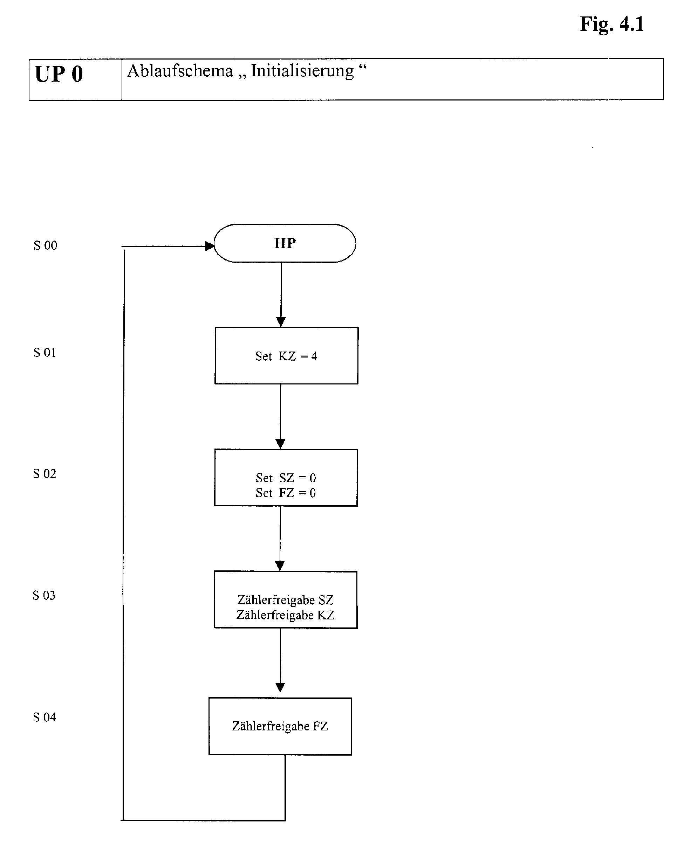

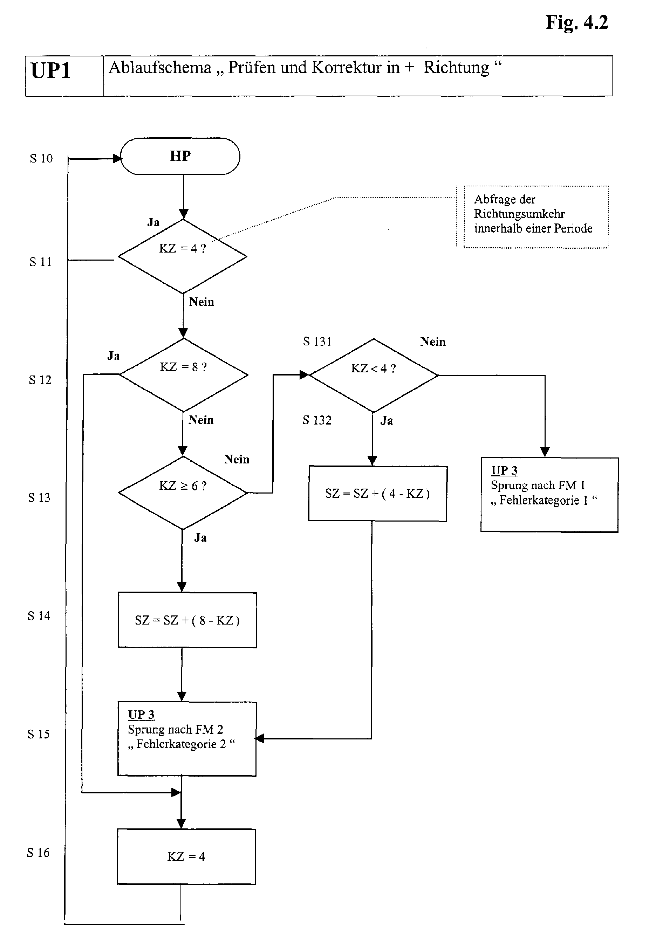

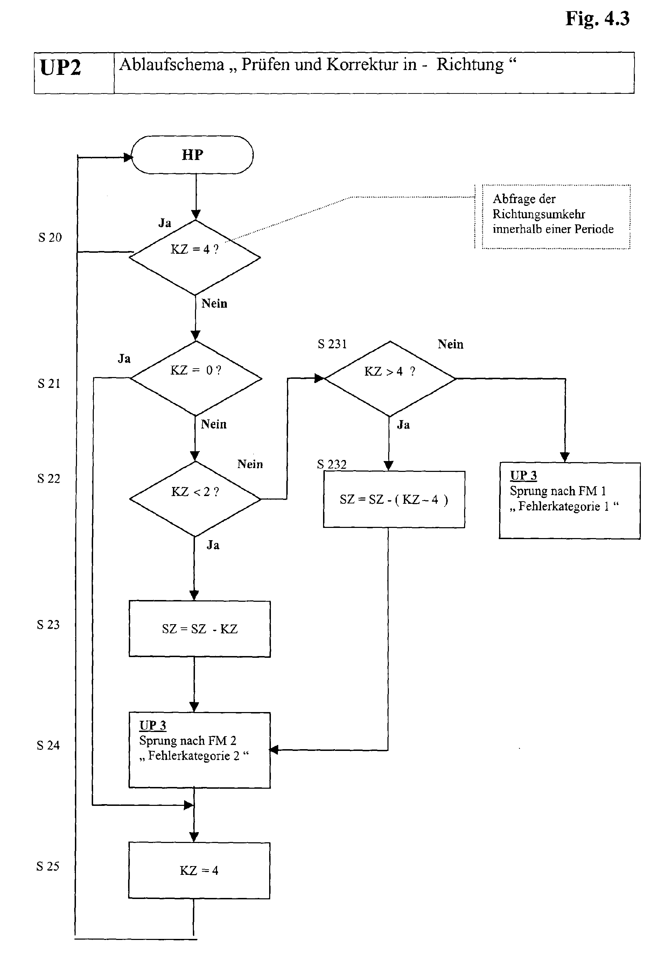

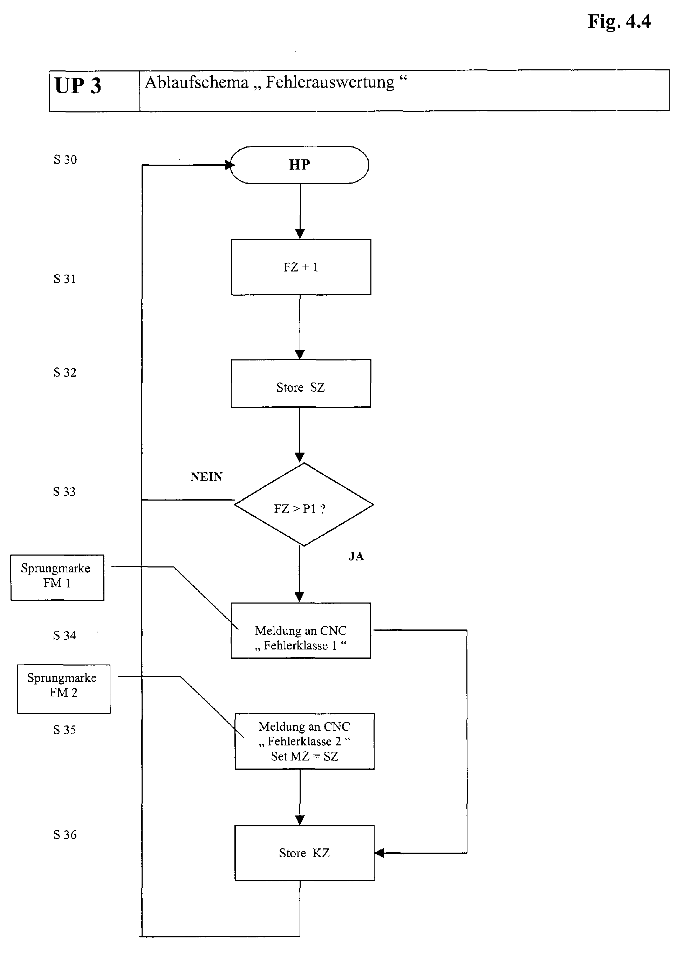

In der Baugruppe (5) Mikroprozessor überprüft das in den Fig. 4.0-4.4 dargestellte Programm die Signale A, B und C auf Vollständigkeit, korrigiert Zählabweichungen sofort innerhalb einer Teilungsperiode, ermittelt die Fehleranzahl, speichert jeden auftretenden Fehler mit dem Positionswert (SZ) ab und korrigiert über ein separates Datenbussystem den Positionswert Masterzähler (MZ) in der übergelagerten Baueinheit "CNC-Maschinensteuerung" (6). Eine Pufferbatterie und ein elektrisch beschreibbarer Speicher (E²PROM) schützt das System gegen Datenverlust bei Energieausfall und ermöglicht nach Wiedereinschalten die Reproduktion der Position ohne erneute Referenzfahrt.

**Die Anlage 2/ Fig. 2.0** zeigt ein Beispiel für den Aufbau einer redundanten Meßeinrichtung

Die Meßeinrichtung besteht aus dem Längenmaßstab (1) und der Abtasteinheit (2).

Auf dem Maßstab (1) ist eine gleichmäßige, inkrementelle Teilung (Tp) in Form von Metallquadern aufgebracht, die von der Abtasteinheit (2) mittels der induktiven Sensoren (1-4) abgetastet wird.

Die durch die Abtastung der Teilung (Tp) erzeugten periodischen Abtastsignale (A, B,C) werden in den nachgeschalteten Zählern der Baugruppen Fig.1 (5), (6) als Positionsmeßwert für die Relativlage der zu messenden Objekte abgebildet, wobei die Flanken des Signals (C) für das Korrekturverfahren in der Baugruppe Fig.1.0 (4) ausgewertet werden.

Zur Richtungserkennung wird die Teilung (Tp) in bekannter Weise von den Sensoren abgetastet. Der Sensor (B) ist gegenüber dem Sensor (A) im Abstand von entweder einer Viertel Teilungsperiode oder einem ganzzahligem Vielfachen einer Teilungsperiode plus einer viertel Teilungsperiode nacheilend angeordnet.

Die erfindungsgemäßen Merkmale gemäß Oberanspruch 1 begründen sich in der zusätzlichen Anordnung des dritten Sensors (C), dieser ist im Abstand von entweder einer fünfachtel Teilungsperiode oder einem ganzzahligem Vielfachen einer Teilungsperiode plus einer fünfachtel Teilungsperiode zum Sensor (A) nacheilend angeordnet.

Mit diesem zusätzlichen Signal (C) können verschiedene Funktionen ausgelöst werden.

Durch den Abstand der Signale A, B, C ergibt sich eine Redundanz, d.h. der Ausfall eines oder mehrerer Signale wird durch die Schaltungsanordnung IRQ₀₅ in Fig. 3.1 sofort und exakt ermittelt.

*Durch das zusätzliche Signal (C) werden in der Baugruppe (5) Fig. 1 Zählfehler lückenlos erkannt und sofort korrigiert siehe Fig. 4.0-4.4.*

Das Mikroprozessorsystem Fig. 1.0 (5) wird über den positiven Flankenanstieg der Referenzmarke (IRQ₀₇) initialisiert, optional kann die Initialisierung auch mittels fallender oder steigender Flanke vom Signal (C) erfolgen und auf das Referenzsignal gänzlich verzichtet werden.

Erfolgt die Abtastung des Maßstabs in Plusrichtung, aktiviert jede ansteigende Flanke des Verküpfungssignal IRQ₁₀ Fig. 3.1 das Unterprogramm Fig. 4.2, der Zählerstand von KZ wird ausgelesen, im µP-System mit der Sollzahl verglichen, im Fehlerfall der Inhalt des Zählers SZ korrigiert und anschließend wird KZ wieder neu initialisiert - siehe Fig. 4.3 -.

Nach einer Richtungsumkehr erfolgt die Abtastung des Maßstabs in Minusrichtung.

Jede ansteigende Flanke des Verküpfungssignal IRQ₂₀ Fig. 3.1 aktiviert das Unterprogramm Fig. 4.2, der Zählerstand von KZ wird ausgelesen, im µP-System mit der Sollzahl verglichen, im Fehlerfall der Inhalt des Zählers SZ korrigiert und anschließend wird KZ wieder neu initialisiert - siehe Fig. 4.3-.

**Die Anlage 3/ Fig. 3.0** zeigt ein Signallaufzeitdiagramm.

Das Signal (B) ist gegenüber dem Signal (A) im Abstand von entweder einer Viertel Teilungsperiode oder einem ganzzahligem Vielfachen einer Teilungsperiode plus einer Viertelteilungperiode nacheilend phasenverschoben.

Das Signal (C) ist im Abstand von entweder einer fünfachtel Teilungsperiode oder einem ganzzahligem Vielfachen einer Teilungsperiode plus einer Fünfachtelteilungperiode zum Sensor (A) nacheilend phasenverschoben.

Wie in der Tabelle dargestellt ergeben sich für die Abtastung in Plusrichtung vier definierte Signalzustände und davon verschieden jeweils vier definierte Signalzustände für die Abtastung in - Richtung.

**Das Signal IRQ**_{**07**} wird durch die steigende Flanke des Referenzsignals (Rs) ausgelöst, der erzeugte Nadelimpuls aktiviert das UP 0 "Initialisierung" -siehe Fig. 4.0/ S 002-.

**Die Anlage 4/ Fig. 3.1** beschreibt die Signalverknüpfungen

**Das Signal IRQ**_{**05**} wird durch die logische Verknüpfung der Signale A, B und C erzeugt.

Die Signale sind durch ein EXOR-Glied logisch verknüpft und im Normalfall weisen die Signale unterschiedliche H/L Pegel auf (Antivalenz).

Bei einer auftretenden Störung des Meßsystems, wie zB. Verschmutzung/ Ausfall eines Sensors, haben die Signale A,B und C den gleichen Zustand (High- oder Lowpegel), in beiden Fällen wechselt der Ausgang des EXOR-Glieds von Low auf Highpegel, die steigende Flanke erzeugt am Ausgang des nachgeschalteten D-FlipFlop-Glieds einen Nadelimpuls, der das UP 3 "Fehlerauswertung" -siehe Fig. 4.0/S 001- aktiviert.

**Das Signal IRQ**_{**10**} wird durch die logische Verknüpfung der Signale (A invertiert), (B) und ( C) erzeugt.

Die zwei Eingänge des OR-Glieds werden mit den Signalen (B) und (A invertiert) beaufschlagt. Das OR-Glied erzeugt am Ausgang einen Highpegel, wenn das Signal (B) oder (A invertiert), oder beide Signale einen Highpegel führen. Der am Ausgang des OR-Glieds erzeugte Highpegel wird beim Abtasten in Plusrichtung von jeder zweiten steigenden Flanke des Signals ( C) als Nadelimpuls an die nachgeschaltete Baugruppe I/O Peripherie Mikrocomputer (5)-Fig. 1.0- weitergeleitet. Der erzeugte Nadelimpuls aktiviert das UP 1 "Prüfen und Korrektur in Plusrichtung" -siehe Fig. 4.0/ S 003-. Diese Schaltungsanordnung ermöglicht das Zählen der 4 fest definierten Signale innerhalb einer Teilungsperiode beim Abtasten des Längenmaßstabs in Plusrichtung. **Das Signal IRQ**_{**20**} wird durch die logische Verknüpfung der Signale (A invertiert), (B) und ( C) erzeugt. Die zwei Eingänge des OR-Glieds werden mit den Signalen (B) und (A invertiert) beaufschlagt. Das OR-Glied erzeugt am Ausgang einen Highpegel, wenn das Signal (B) oder (A invertiert), oder beide Signale einen Highpegel führen. Der am Ausgang des OR-Glieds erzeugte Highpegel wird beim Abtasten in Minusrichtung von jeder zweiten fallenden Flanke des Signals ( C) als Nadelimpuls an die nachgeschaltete Baugruppe I/O Peripherie Mikrocomputer (5) -Fig. 1.0- weitergeleitet.

Der erzeugte Nadelimpuls aktiviert das UP 2"Prüfen und Korrektur in Minusrichtung" -siehe Fig. 4.0/ S 004-.Diese Schaltungsanordnung ermöglicht das Zählen der 4 fest definierten Signale innerhalb einer Teilungsperiode beim Abtasten des Längenmaßstabs in Minusrichtung.

**Die Anlage 5/ Fig. 4.0** beschreibt den Ablauf des Hauptprogrammes HP 00.

Das Hauptprogramm beinhaltet die Unterprogramme UP 0- UP 3 und wird zyklisch durchlaufen. **Im Schritt S 000** werden die Daten der I/O Baugruppe des µP-Systems -siehe Fig.1.0 "I/O Peripherie Mikrocomputer" (5)-, zyklisch im Prozessortakt ein- und ausgelesen. **Im Schritt S 001** unterbricht der Nadelimpuls des Signals IRQ₀₅ den Ablauf vom HP und ruft das UP 3 "Fehlerauswertung" auf, nach Ausführung des UP 3 wird der HP-Ablauf gemäß Rücksprungadresse fortgesetzt..

**Im Schritt S 002** unterbricht der Nadelimpuls des Signals IRQ₀₇ den Ablauf vom HP und ruft das UP 0 "Initialisierung" auf, nach Ausführung des UP 0 wird der HP-Ablauf gemäß Rücksprungadresse fortgesetzt **Im Schritt S 003** unterbricht der Nadelimpuls des Signals IRQ₁₀ den Ablauf vom HP und ruft das UP 1 "Prüfen und Korrektur in Plusrichtung" auf, nach Ausführung des UP 1 wird der HP-Ablauf gemäß Rücksprungadresse fortgesetzt. **Im Schritt S 004** unterbricht der Nadelimpuls des Signals IRQ₂₀ den Ablauf vom HP und ruft das UP 2 "Prüfen und Korrektur in Minusrichtung" auf, nach Ausführung des UP 2 wird der HP-Ablauf gemäß Rücksprungadresse fortgesetzt. **Im Schritt S 005** wird der Wert des Zählers ( KZ) abgefragt. Liegt der Wert außerhalb des gültigen Wertebereiches 0-8, wird der HP-Ablauf unterbrochen und das UP 3" Fehlerauswertung" an der Sprungmarke UP3/ FM 1 aktiviert, nach Ausführung des UP 3 wird der HP-Ablauf gemäß Rücksprungadresse fortgesetzt.

**In der Anlage 6/ Fig. 4.1** wird der Ablauf des Unterprogramms UP 0 "Initialisierung" beschrieben.

Das Unterprogramm UP 0 wird im HP00/ S002 durch das Signal IRQ₀₇ aktiviert. **Im Schritt S 00** wird der Zähler ( KZ/ Korrekturzähler ) auf 4 gesetzt, dadurch erkennt das System eine Richtungsumkehr während einer unvollendeten Abtastung einer Teilungsperiode. Ist im Normalfall KZ= 0, so wurde eine ganze Teilungperiode in - Richtung abgetastet, ist im Normalfall KZ= 4, so fand in Abhängigkeit mit den Signalen IRQ_{10/20} eine Richtungsumkehr innerhalb einer Teilungsperiode statt und ist im Normalfall KZ= 8, so wurde eine ganze Teilungsperiode in Plusrichtung abgetastet, **im Schritt S 01** werden die Zähler ( SZ/ Slavezähler) und (FZ/ Fehlerzähler) auf 0 gesetzt. **In den Schritten S 02-04** werden die Zähler (KZ/ Korrekturzähler ), ( SZ/ Slavezähler ) und (FZ/ Fehlerzähler) aktiviert.

In der **Anlage 6 / Fig. 4.2** wird der Ablauf des Unterprogramm UP 1 "Prüfen und Korrektur in Plusrichtung" beschrieben.

Das Unterprogramm UP 1 wird im HP00/ S003 durch das Signal IRQ₁₀ aktiviert.

Das Unterprogramm UP 1 erfüllt die Aufgabe den teilweisen oder ganzen Ausfall einer Signalfolge der Spur A oder B - beim Abtasten des Längenmaßstabs in Plusrichtung -zu korrigieren. Fallen beide Spuren gleichzeitig aus, liegt ein fataler Fehler der Kategorie 1 vor, dieser kann nicht korrigiert werden, das nun aktivierte Unterprogramm UP3 "Fehlerauswertung" sendet die Fehlermeldung an die übergeordnete Baueinheit "CNC-Maschinensteuerung (6) Fig. 1.0.**Im Schritt S 11** wird der Inhalt von KZ ausgelesen und mit dem Wert 4 verglichen, ist die Abfrage wahr, wurde die Richtung innerhalb einer unvollendeten Abtastung einer Teilungsperiode von Minus- nach Plus Richtung gewechselt. Der Wert 4 entspricht dem Normalfall und der **Rücksprung S 10** zum Hauptprogramm wird ausgeführt. Ist die Abfrage unwahr, wird **im Schritt S 12** der Inhalt von KZ mit dem Wert 8 verglichen, ist die Abfrage wahr, wurde eine ganze Teilungsperiode in Plusrichtung abgetastet. Der Wert 8 entspricht dem Normalfall, der Sprung zum Schritt S16 wird ausgeführt, **im Schritt S16** wird KZ auf 4 gesetzt und anschließend wird der **Rücksprung S10** zum Hauptprogramm ausgeführt. Ist die Abfrage unwahr, wird **im Schritt S 13** ermittelt, ob der Inhalt von KZ größer oder gleich als der Wert 6 ist, ist die Abfrage wahr, wurde eine ganze Teilungsperiode in Plusrichtung abgetastet. Der Wertebereich 6- 7 entspricht dem Fehlerfall der Kategorie 2 (korrigierbarer Fehler) und zeigt eine Störung der Spur A oder B an, folgend wird **im Schritt S 14** der Inhalt von SZ durch die Operation SZ=SZ+( 8-KZ) korrigiert, anschließend wird **im Schritt S 15** der Sprung zur Marke FM 2 im Unterprogramm UP 3 ausgeführt. Nach Ausführung des UP 3 wird der Rücksprung zum UP 1/ S16 ausgeführt, **im Schritt S16** wird KZ auf 4 gesetzt und anschließend wird der **Rücksprung S10** zum Hauptprogramm ausgeführt. Ist die Abfrage **im Schritt S13** unwahr, wird **im Schritt S 131** ermittelt, ob der Inhalt von KZ kleiner ist als der Wert 4, ist die Abfrage wahr, wurde die Richtung innerhalb einer unvollendeten Abtastung einer Teilungsperiode von Minus- nach Plus Richtung gewechselt.

Der Wertebereich 1-3 kann erst nach dem Abtasten einer weiteren ganzen Teilungsperiode eingegrenzt werden und wird in diesem Fall der Kategorie 2 "korrigierbarer Fehler" zugeordnet, anschließend wird **im Schritt S 132** der Inhalt von SZ durch die Operation SZ=SZ+(4 - KZ) korrigiert, anschließend wird **im Schritt S 15** der Sprung zur Marke FM 2 im Unterprogramm UP 3 ausgeführt. Nach Ausführung des UP 3 wird der Rücksprung zum UP 1/ S16 ausgeführt, **im Schritt S16** wird KZ auf 4 gesetzt und anschließend wird der **Rücksprung S10** zum Hauptprogramm ausgeführt Ist die Abfrage im **Schritt S 131** unwahr, wird der Sprung zur Marke FM 1 im Unterprogramm UP 3 ausgeführt. Nach Ausführung des UP 3/ S 30 wird der Rücksprung zum HP 00 ausgeführt.

**In der Anlage 7/ Fig. 4.3** wird das Unterprogramm UP 2 "Prüfen und Korrektur in Minusrichtung" beschrieben

Das Unterprogramm UP 2 wird im HP00/ S004 durch das Signal IRQ₂₀ aktiviert. Das Unterprogramm UP 2 erfüllt die Aufgabe den teilweisen oder ganzen Ausfall der Signalfolge der Spur A oder B - beim Abtasten des Längenmaßstabs in Minusrichtung -zu korrigieren. Fallen beide Spuren gleichzeitig aus, liegt ein fataler Fehler der Kategorie 1 vor, dieser kann nicht korrigiert werden, das nun aktivierte Unterprogramm UP3 "Fehlerauswertung" sendet die Fehlermeldung an die übergeordnete Baueinheit "CNC-Maschinensteuerung (6) Fig. 1.0.

**Im Schritt S 21** wird der Inhalt von KZ ausgelesen und mit dem Wert 4 verglichen, ist die Abfrage wahr, wurde die Richtung innerhalb einer unvollendeten Abtastung einer Teilungsperiode von Plusnach Minusrichtung gewechselt. Der Wert 4 entspricht demNormalfall und der **Rücksprung S 20** zum Hauptprogramm wird ausgeführt.Ist die Abfrage unwahr,wird **im Schritt S 22** der Inhalt von KZ mit dem Wert 0 verglichen, ist die Abfrage wahr, wurde eine ganze Teilungsperiode in Minusrichtung abgetastet. Der Wert 0 entspricht dem Normalfall, der Sprung zum Schritt S26 wird ausgeführt, **im Schritt S26** wird KZ auf 4 gesetzt und anschließend wird der **Rücksprung S20** zum Hauptprogramm ausgeführt.

Ist die Abfrage unwahr, wird **im Schritt S 23** ermittelt, ob der Inhalt von KZ kleiner oder gleich als der Wert 2 ist, ist die Abfrage wahr, wurde eine ganze Teilungsperiode in Minusrichtung abgetastet. Der Wertebereich 1-2 entspricht dem Fehlerfall der Kategorie 2 (korrigierbarer Fehler) und zeigt eine Störung der Spur A oder B an, folgend wird **im Schritt S 24** der Inhalt von SZ durch die Operation SZ=SZ - KZ korrigiert, anschließend wird **im Schritt S 25** der Sprung zur Marke FM 2 im Unterprogramm UP 3 ausgeführt. Nach Ausführung des UP 3 wird der Rücksprung zum UP 2/ S26 ausgeführt, **im Schritt S26** wird KZ auf 4 gesetzt und anschließend wird der Rücksprung S20 zum Hauptprogramm ausgeführt. Ist die Abfrage **im Schritt S 23** unwahr, wird **im Schritt S 231** ermittelt, ob der Inhalt von KZ größer ist als der Wert 4, ist die Abfrage wahr, wurde die Richtung innerhalb einer unvollendeten Abtastung einer Teilungsperiode von Plus- nach Minusrichtung gewechselt Der Wertebereich 5-7 kann erst nach dem Abtasten einer weiteren ganzen Teilungsperiode eingegrenzt werden und wird in diesem Fall der Kategorie 2 "korrigierbarer Fehler" zugeordnet, anschließend wird im **Schritt S 232** der Inhalt von SZ durch die Operation SZ=SZ- (KZ-4) korrigiert, anschließend wird **im Schritt S 25** der Sprung zur Marke FM 2 im Unterprogramm UP 3 ausgeführt. Nach Ausführung des UP 3 wird der Rücksprung zum UP 2/ S26 ausgeführt, **im Schritt S26** wird KZ auf 4 gesetzt und anschließend wird der **Rücksprung S20** zum Hauptprogramm ausgeführt. Ist die Abfrage im **Schritt S 231** unwahr, wird der Sprung zur Marke FM 1 im Unterprogramm UP 3 ausgeführt. Nach Ausführung des UP 3/ S 30 wird der Rücksprung zum HP 00 ausgeführt.

**In der Anlage 8/ Fig. 4.4** wird das Unterprogramm UP 3 "Fehlerauswertung" beschrieben.

Das Unterprogramm UP 3 kann durch folgende Programmschritte aufgerufen werden. Im Hauptprogramm HP00/ 5001, im Unterprogramm UP 1/S 15/S131 und im Unterprogramm UP 2/S 25/S231. Das Unterprogramm UP 3 erfüllt die Aufgabe die Fehlermeldungen der Kategorie 1 und 2 an die übergeordnete Baueinheit "CNC-Maschinensteuerung (6) Fig. 1.0 zu senden, die Fehlerhäufigkeit zu erfassen und beim Auftreten eines Fehlers den Positionswert SZ und die Zählabweichung KZ für die Systemdiagnose abzuspeichern. Fehler der Kategorie 2 werden durch ein Abgleich des Slavezählers SZ mit dem Masterzähler MZ in der übergelagerte Baueinheit "CNC-Maschinensteuerung" (6) /Fig. 1.0 korrigiert. Erfolgt der Aufruf vom UP 3 durch das HP00/ S001, wird **im Schritt S 31** der Fehlerzähler FZ inkrementiert, anschließend wird **im Schritt S 32** der Inhalt vom SZ ausgelesen und abgespeichert, anschließend wird **im Schritt S 33** der Inhalt von FZ mit einem parametrierbaren Wert verglichen und abgefragt, ob die maximal zulässige Fehleranzahl -festgelegt durch P1- überschritten wurde, ist die Abfrage wahr, so wird **im Schritt S 34** die Meldung "Fehlerklasse 1", d.h. nicht korrigierbarer Fehler im Meßsystem an die übergelagerte Baueinheit "CNC-Maschinensteuerung" (6) /Fig. 1.0 gesendet, anschließend wird **im Schritt S 36** der Inhalt von KZ ausgelesen und abgespeichert, dann wird **im Schritt S 30** der Rücksprung zum HP 00 ausgeführt. Ist die Abfrage **im Schritt S 33** unwahr, wird **im Schritt S 30** der Rücksprung zum HP 00 ausgeführt.

Erfolgt der Aufruf vom UP 3 durch das UP 1/ S 15 oder vom UP 2/ S 25, wird **im Schritt S 35** die Meldung "Fehlerklasse 2", d.h. korrigierbarer Fehler im Meßsystem an die übergelagerte Baueinheit "CNC-Maschinensteuerung" (6) /Fig. 1.0 gesendet, anschließend wird der Inhalt Slavezähler SZ vom Masterzähler MZ der übergelagerten Baueinheit "CNC-Maschinensteuerung" (6) /Fig. 1.0 übernommen, dann wird **im Schritt S 36** der Inhalt von KZ ausgelesen und abgespeichert, dann wird **im Schritt S 30** der Rücksprung zum HP 00 ausgeführt.

Erfolgt der Aufruf vom UP 3 durch das UP 1/ S 131 oder vom UP 2/S 231, wird **im Schritt S 34** die Meldung "Fehlerklasse 1", d.h. nicht korrigierbarer Fehler im Meßsystem an die übergelagerte Baueinheit "CNC-Maschinensteuerung" (6) /Fig. 1.0 gesendet, anschließend wird **im Schritt S 36** der Inhalt von KZ ausgelesen und abgespeichert, dann wird **im Schritt S 30** der Rücksprung zum HP 00 ausgeführt.

## Patentansprüche

1. Verfahren zur Prüfung von inkrementellen Meßsystemen, insbesondere von Positionsmeßeinrichtungen wie inkrementelle Längenmaßstäbe und inkrementelle Winkelmeßeinrichtungen, unter Verwendung einer Teilung auf den Positionsmeßeinrichtungen, **dadurch gekennzeichnet, daß** die durch eine Abtasteinheit gewonnenen, digitalen Signale, ausgenommen dem Referenzsignal, um einer viertel Teilungsperiode oder einem ganzen Vielfachen und fünfachtel einer Teilungsperiode, oder einem ganzen Vielfachen, zueinander phasenverschoben sind, wobei von den Signalen, die Folge eines Signals für die Beschreibung einer vollständigen Teilungsperiode festgelegt wird und jede zweite Flanke des festgelegten Signals einen Zähler triggert, der ausschließlich innerhalb einer Teilungsperiode die verschiedenen Signalfolgen als Anzahl von Impulsen zählt, wobei die Anzahl der Impulse dem Ergebnis - Anzahl der Sensoren, die die Signale für die Positionsmeßwerterfassung erzeugen, multipliziert mit dem Faktor zwei -, entspricht und wobei bei gleichem Pegel der Signale -ausgenommen dem Referenzsignal- eine Fehlermeldung erzeugt wird.

2. Intelligentes Meßsystem nach Anspruch 1, **dadurch gekennzeichnet, daß** in der Baugruppe (5) Mikroprozessor das in den Fig. 4.0-4.4 dargestellte Programm die Signale A, B und C - Fig. 3.0- auf Vollständigkeit überprüft, Zählfehler sofort erkennt und korrigiert, die Fehlerhäufigkeit ermittelt, jeden auftretenden Fehler mit dem Positionswert (SZ) und der Fehlergröße (KZ) abspeichert und über ein separates, steckbares Datenbussystem den Positionswert Masterzähler (MZ) in der übergelagerten Baueinheit "CNC-Maschinensteuerung" (6) korrigiert.

3. Intelligentes Meßsystem zur Durchführung des Verfahrens nach den Ansprüchen 1-2, **dadurch gekennzeichnet, daß** eine Baugruppe "redundante Meßvorrichtung" (2), bestehend aus einem inkrementellen Maßstab und einer Abtasteinheit (2) (Fig.2), die durch ein Mehrleitersystem mit der Baugruppe "Interface" (3) verbunden ist, wobei die Ausgangssignale der Baugruppe (3) den Baugruppen Zähler/ Signale (4), sowie der Baugruppe Input/Output Mikrocomputer (5) und dem Masterzähler der übergelagerten Baueinheit "CNC-Maschinensteuerung" (6) mittels eines Mehrleitersystems zugeführt werden und ein separates, steckbares Datenbussystem die Baugruppen "Zähler/ Signale" (4) mit der Baugruppe "I/O Peripherie Mikrocomputer" (5) und dem Masterzähler der übergelagerten Baueinheit "CNC-Maschinensteuerung" (6) verbindet.

4. Intelligentes Meßsystem nach Anspruch 3, **dadurch gekennzeichnet, daß** in der Baugruppe (2) mittels einer Abtasteinheit (2) (Fig.2) die phasenverschobenen digitalen Signale A, B, C und RS (Fig.3.0) gewonnen und durch ein Mehrleitersystem der Baugruppe Interface (3) und der übergelagerten Baueinheit (6) "MZ/ Masterzähler" zugeführt werden, die in der Baugruppe (3) logisch verknüpft werden, so daß beim Abtasten des Maßstabs (2) Fig.2.0 während einer Teilungsperiode 8 verschiedene fest definierte Signalzustände erzeugt (Fig. 3.0), diese teilen sich in jeweils 4 verschiedene fest definierte Signalzustände für Plus- und Minusrichtung auf und werden über ein Mehrleitersystem den programmierbaren Zählern KZ (Korrekturzähler) und dem SZ (Slavezähler) der Baugruppe (4) zugeführt.
Die Zähler KZ und SZ sind programmierbare UP/Down Zähler, die die Signale der nicht dargestellten D-Flip-Flop-Schaltung in Plusrichtung addieren und die Signale in Minusrichtung subtrahieren. Der Zählwert der Zähler KZ und SZ kann durch die Baugruppe (5) Mikroprozessor überschrieben, wie auch ausgelesen werden.
In der Baugruppe (4) werden die Signale A, B und C gemäß der Fig. 3.1 verknüpft und das Verknüpfungsergebnis wird über ein separates Datenbussystem der Baugruppe (5) Mikroprozessor zugeführt.
